# EUROPEAN PATENT APPLICATION

(11) **EP 4 407 233 A1**
(43) Date of publication of application: **31.07.2024**
(21) Application number: 24153548.3
(22) Date of filing: 23.01.2024
(51) Int. Cl.: F23R 3/28, F23D 11/38

(54) **FUEL NOZZLES**

(30) Priority: 24.01.2023 US 202318158979
(71) Applicant: Hamilton Sundstrand Corporation, Charlotte, NC 28217-4578 (US)
(72) Inventor: RYON, Jason A., Carlisle, 50047 (US); WILLIAMS, Brandon P., Johnston, IA (US)
(74) Representative: Dehns

(57) **Abstract**

In accordance with at least one aspect of this disclosure, a system includes a fuel nozzle (104), the fuel nozzle (104). The fuel nozzle (104) includes, a nozzle body (110) defining a spray axis from a nozzle inlet to a nozzle outlet and a fuel circuit (122) defined in the nozzle body (110) configured to issue a fuel flow from an outlet orifice into a combustor. The outlet orifice is defined along an injection axis, wherein the injection axis is laterally offset from a radius of the spray axis for imparting a tangential direction onto the fuel flow issuing from the fuel circuit (122).

## Description

### TECHNICAL FIELD

The present disclosure relates to fuel nozzles.

### BACKGROUND

Dual circuit fuel injectors are used in gas turbine engine combustors. The secondary circuit of some fuel injectors can have a number of straight jet orifices which are oriented to inject fuel radially outwards from the injector. The jet of fuel impinges on a prefilming diameter located radially outwards from the injector. The impingement on the prefilming diameter spreads out the jet into a film, which spreads out and atomizes the fuel. When the secondary jets hit the prefilmer surface, the fuel spreads along the prefilmer surface, however a large portion of the fuel may end up concentrated at the location where the jet hits, rather than spreading along the prefilmer surface. The result can be locally non-uniform fuel to air distribution in the combustor possibly resulting in less efficient combustion and/or generation of pollutants such as NOx.

There is always a need in the art for improvements to fuel injection in the aerospace industry. This disclosure provides a solution for this need.

### SUMMARY

In accordance with at least one aspect of this disclosure, a system includes a fuel nozzle, the fuel nozzle. The fuel nozzle includes, a nozzle body defining a spray axis from a nozzle inlet to a nozzle outlet and a fuel circuit defined in the nozzle body configured to issue a fuel flow from an outlet orifice into a combustor. The outlet orifice is defined along an injection axis, wherein the injection axis is laterally offset from a radius of the spray axis for imparting a tangential direction onto the fuel flow issuing from the fuel circuit.

In accordance with at least one aspect of this disclosure, a system, comprises : a fuel nozzle, the fuel nozzle comprising: a nozzle body defining a spray axis from a nozzle inlet to a nozzle outlet; a fuel circuit defined in the nozzle body configured to issue a fuel flow from an outlet orifice into a combustor, wherein the outlet orifice is defined along an injection axis, wherein the injection axis is laterally offset from a radius of the spray axis for imparting a tangential direction onto the fuel flow issuing from the fuel circuit, wherein a downstream end of the prefilmer surface defines the nozzle outlet, and further comprising an air circuit defined in the nozzle body extending from the nozzle inlet, between the prefilmer wall and fuel circuit portion of the nozzle body, to the nozzle outlet, wherein the outlet orifice is configured to issue the fuel flow as an impingement jet onto the prefilmer surface, wherein the impingement jet is configured to impinge the prefilmer surface at tangential angle such that the fuel flow spreads circumferentially around the prefilmer surface as a film along the prefilmer surface.

In embodiments, the nozzle body can further include the prefilmer surface. The prefilmer surface can be a radially inward facing cylindrical or conical, converging or diverging, surface of a prefilmer wall radially outward from a fuel circuit portion of the nozzle body wherein the fuel circuit is defined. A downstream end of the prefilmer surface can define the nozzle outlet. An air circuit can be defined in the nozzle body extending from the nozzle inlet, between the prefilmer wall and fuel circuit portion of the nozzle body, to the nozzle outlet.

In embodiments, the outlet orifice is configured to issue the fuel flow as an impingement jet onto the prefilmer surface. The impingement jet can be configured to impinge the prefilmer surface at tangential angle such that the fuel flow spreads circumferentially around the prefilmer surface as a film along the prefilmer surface. In embodiments, the film can occupy a greater surface area than if the impingement jet impinges the prefilmer surface at a perpendicular angle.

In certain embodiments, the film can form a triangular shape on the prefilmer surface extending from an impingement point to the downstream end of the of the prefilmer surface. In embodiments, the triangular shape can be angled (or biased) clockwise or counter-clockwise along the prefilmer surface. The air circuit can be configured atomize the film. In embodiments, the injection axis can diverge away from the spray axis.

In embodiments, the nozzle body can include a plurality of outlet orifices defined in the nozzle body, arranged circumferentially about the central axis. Each outlet orifice can be defined along a respective injection axis. Each injection axis can be laterally offset from a respective radius of the spray axis for imparting a tangential direction onto the fuel flow issuing from the fuel circuit. Each outlet orifice can be configured to issue the fuel flow as a respective impingement jet onto the prefilmer surface.

Each respective impingement j et can be configured to impinge the prefilmer surface at tangential angle such that the fuel flow spreads circumferentially around the prefilmer surface as a respective film along the prefilmer surface. Each respective film can form a respective triangular shape extending from a respective impingement point to a respective portion of the downstream end of the prefilmer surface. Each triangular shape can be angled (or biased) clockwise or counter-clockwise along the prefilmer surface. Each injection axis can diverge away from the spray axis.

In embodiments, the system can further include the combustor A fuel source can be fluidly connected to the fuel circuit upstream of the combustor. A fuel injector can be operatively connected to the combustor and the fuel nozzle can be mounted to the fuel injector.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic cross-sectional view of an embodiment of system in accordance with this disclosure, showing a fuel injector mounted to a combustor;
Fig. 2 is a front elevation view of a nozzle body of the fuel injector if Fig. 1; and
Fig. 3 is a perspective cross-sectional view of the nozzle body of Fig. 2.

### DETAILED DESCRIPTION

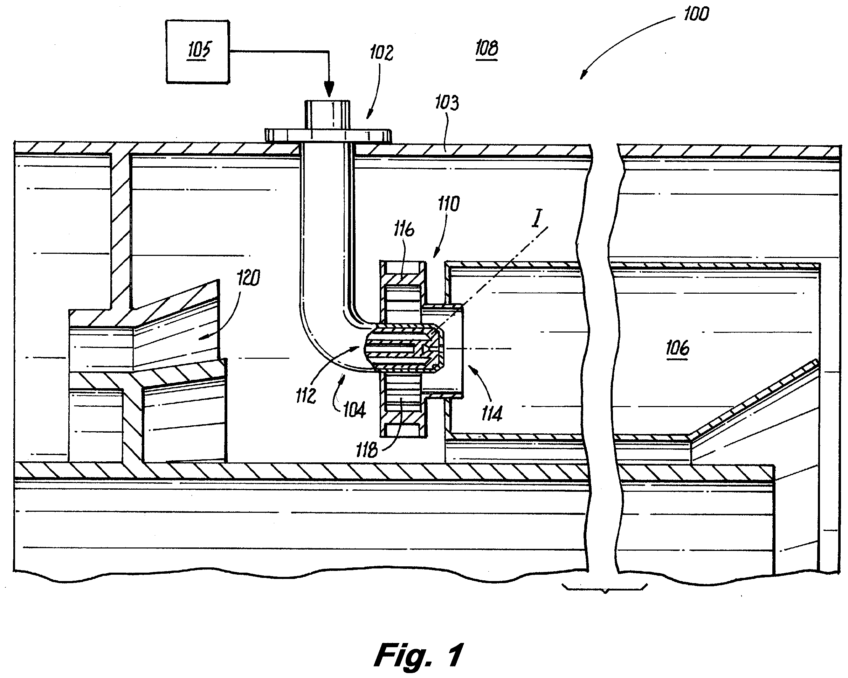

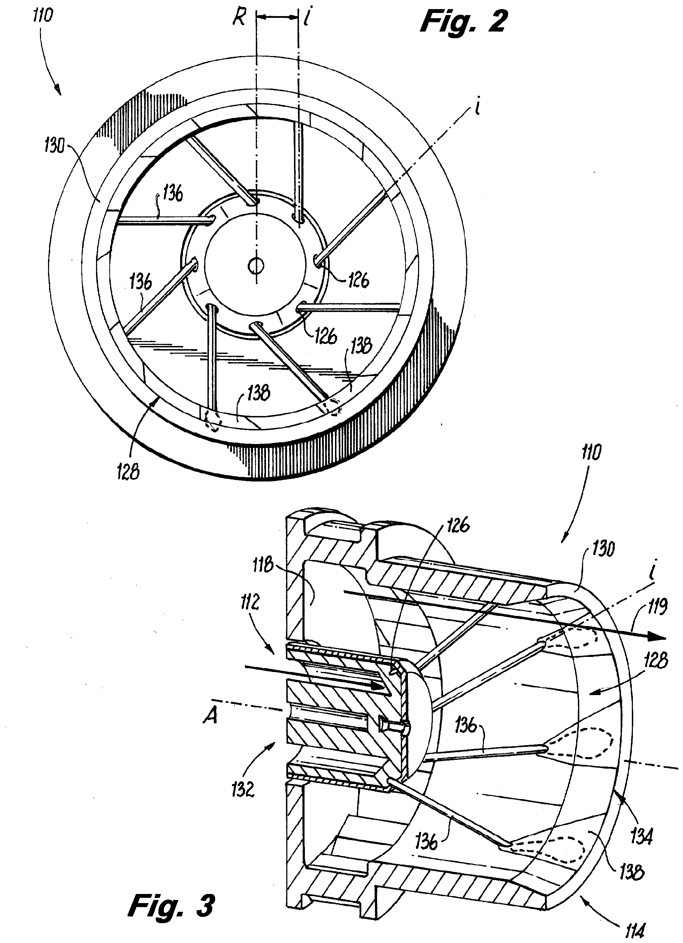

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Figs. 2-3.

In accordance with at least one aspect of this disclosure, as shown in Fig. 1, a system 100 can include a fuel injector 102 mounted to an engine case 103. A fuel nozzle 104 can be mounted to the fuel injector 102 to issue a fuel flow from a fuel source 105 into a combustion chamber 106 of an engine 108. The fuel nozzle 104 can include a nozzle body 110 defining a central axis A from a nozzle inlet 112 to a nozzle outlet 114. An air swirler 116 can be mounted to the nozzle body 110 defining at least a portion of an air circuit 118 configured to issue an air flow 119 from a compressor section 120 of the engine 108 into the combustion chamber 106.

With reference to Figs. 1-3, a fuel circuit 122 is defined in the nozzle body 110 configured to issue a fuel flow 124 from an outlet orifice 126 into the combustor 106. The outlet orifice 126 can be defined along an injection axis I, wherein the injection axis I is laterally offset from a radius R (e.g., a radial plane) of the spray axis A for imparting a tangential direction onto the fuel flow 124 issuing from the fuel circuit 122. In embodiments, the injection axis I can diverge away from the spray axis A. While one fuel circuit is described herein, one having ordinary skill of the art in view of this disclosure, would recognize that one or more additional fuel circuits may be included in the nozzle body 110.

With reference to Figs. 2 and 3, in embodiments, the nozzle body can further include a prefilmer surface 128. The prefilmer surface 128 can be a radially inward facing cylindrical or conical (e.g., converging or diverging) surface of a prefilmer wall 130 radially outward from a fuel circuit portion 132 of the nozzle body wherein the fuel circuit is defined. A downstream end 134 of the prefilmer surface can define the nozzle outlet 114. The air circuit 118 can be defined in the nozzle body 110 extending from the nozzle inlet 112, between the prefilmer wall 130 and fuel circuit portion 132 of the nozzle body 110, to the nozzle outlet 114.

As best seen in Figs. 2 and 3, in embodiments, the outlet orifice 126 is configured to issue the fuel flow 122 as an impingement jet 136 onto the prefilmer surface 128. The impingement jet 136 can be configured to impinge the prefilmer surface 128 at tangential angle such that the fuel flow 122 spreads circumferentially around the prefilmer surface 128 as a film 138 along the prefilmer surface 128. In embodiments, the film 138 can occupy a greater surface area on the prefilmer surface 128 than if the impingement j et impinges the prefilmer surface at a perpendicular angle. For example, the hashed lines in Figs. 2 and 3 show a film when the impingement jet impinges perpendicular to the prefilmer surface 128.

As shown, the film 138 can form a triangular shape on the prefilmer surface 128 extending from an impingement point to the downstream end of the of the prefilmer surface. In embodiments, the triangular shape can be angled (or biased) clockwise or counter-clockwise along the prefilmer surface 128, a counter-clockwise direction is shown in Figs. 2 and 3. The air circuit 118 can be configured atomize the film 138 as it passes over the prefilmer surface 128. While the nozzle body 110 described herein is described with respect to a single outlet orifice 126, in embodiments (e.g., as shown), the nozzle body 110 can include a plurality of outlet orifices 126 defined in the nozzle body 110, arranged circumferentially about the spray axis A. Each outlet orifice 126 can be defined along a respective injection axis I, each injection axis laterally offset from the radius R to produce a respective film 138 as described above.

A typical fuel injector having secondary fuel orifices has the outlet orifices of the secondary fuel circuit aligned with the center plane of the injector. In such injectors, the direction of the impingement jets issued from the outlet orifices have only a radial and axial component. In embodiments of the nozzle described herein, the plane of the secondary orifices is offset from the center plane of the injector. This gives the direction of the impingement jets an additional tangential component. Thus, in embodiments, when the jet impinges on the prefilmer surface, the momentum of the fuel flow helps to spread the jet tangentially around the prefilming surface to form a larger film than was previously possible. Embodiments therefore provide for greater fuel spread around the circumference of the prefilmer surface, where the film detaches from the prefilmer lip (e.g., the downstream end of the prefilmer surface). A larger spread of the fuel on the prefilmer surface provides for a thinner film, which can produce finer droplets during atomization for improved combustion.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the apparatus and methods of the subject disclosure have been shown and described, those skilled in the art will readily appreciate that changes and/or modifications may be made thereto without departing from the scope of the subject disclosure.

## Claims

1. A system, comprising:
a fuel nozzle (104), the fuel nozzle (104) comprising:
a nozzle body (110) defining a spray axis from a nozzle inlet to a nozzle outlet;
a fuel circuit (122) defined in the nozzle body (110) configured to issue a fuel flow from an outlet orifice into a combustor, wherein the outlet orifice is defined along an injection axis, wherein the injection axis is laterally offset from a radius of the spray axis for imparting a tangential direction onto the fuel flow issuing from the fuel circuit (122).

2. The system of claim 1, wherein the injection axis diverges away from the spray axis.

3. The system of claim 1 or 2, wherein the nozzle body (110) further comprises a prefilmer surface, wherein the prefilmer surface is a radially inward facing cylindrical or conical surface of a prefilmer wall radially outward from a fuel circuit portion of the nozzle body (110) wherein the fuel circuit (122) is defined.

4. The system of claim 3, wherein a downstream end of the prefilmer surface defines the nozzle outlet, and further comprising an air circuit defined in the nozzle body (110) extending from the nozzle inlet, between the prefilmer wall and fuel circuit portion of the nozzle body (110), to the nozzle outlet.

5. The system of claim 4, wherein the outlet orifice is configured to issue the fuel flow as an impingement jet onto the prefilmer surface, wherein the impingement jet is configured to impinge the prefilmer surface at tangential angle such that the fuel flow spreads circumferentially around the prefilmer surface as a film along the prefilmer surface.

6. The system of claim 5, wherein the film forms a triangular shape extending from an impingement point to the downstream surface of the prefilmer surface.

7. The system of claim 6, wherein the triangular shape is angled clockwise or counter-clockwise along the prefilmer surface.

8. The system of claim 5, wherein the air circuit is configured atomize the film.

9. The system of claim 5, further comprising a plurality of outlet orifices defined in the nozzle body (110), arranged circumferentially about the spray axis, wherein each outlet orifice is defined along a respective injection axis, wherein each injection axis is laterally offset from a radius of the spray axis for imparting a tangential direction onto the fuel flow issuing from the fuel circuit (122).

10. The system of claim 9, wherein each outlet orifice is configured to issue the fuel flow as a respective impingement jet onto the prefilmer surface, wherein each respective impingement jet is configured to impinge the prefilmer surface at tangential angle such that the fuel flow spreads circumferentially around the prefilmer surface as a respective film along the prefilmer surface.

11. The system of claim 10, wherein each respective film forms a respective triangular shape extending from a respective impingement point.

12. The system of claim 12, wherein each triangular shape is angled clockwise or counter-clockwise along the prefilmer surface.

13. The system of claim 9, wherein each injection axis diverges away from the spray axis.

14. The system of any preceding claim, further comprising, the combustor.

15. The system of claim 8, further comprising fuel source fluidly connected to the fuel circuit (122) upstream of the combustor, and optionally further comprising a fuel injector operatively connected to the combustor, wherein the fuel nozzle (104) is mounted to the fuel injector.
